# EUROPÄISCHE PATENTANMELDUNG

(11) **EP 1 944 665 A1**
(43) Veröffentlichungstag der Anmeldung: **16.07.2008**
(21) Anmeldenummer: 07000719.0
(22) Anmeldetag: 15.01.2007
(51) Int. Cl.: G05B 19/042, G05B 19/05, G05B 23/02, H04L 12/26, H04L 29/06

(54) **Protokolltester für ein Automatisierungssystem**

(71) Anmelder: SIEMENS AKTIENGESELLSCHAFT, 80333 München (DE)
(72) Erfinder: Füsslein, Wolfgang, 76879 Essingen (DE); Kohl, Frederic, 67630 Neewiller (FR)

(57) **Zusammenfassung**

Es wird ein Verfahren zum Betrieb eines Automatisierungssystems (10) angegeben, das mindestens zwei untereinander kommunikativ verbundene, zumindest zeitweise als Sender (28) und Empfänger (30) fungierende Geräte umfasst, wobei im Zusammenhang mit Kommunikationsvorgängen zwischen Sender (28) und Empfänger (30) übermittelte Telegramme (36) von einem Protokollierungswerkzeug (34) während des Kommunikationsvorgangs, also zur Laufzeit, erfasst und gespeichert werden, wobei das Protokollierungswerkzeug (34) eine Mitschrift (40) des Kommunikationsvorgangs für Performanceuntersuchungen bereitstellt.

## Beschreibung

Die Erfindung betrifft ein Verfahren zum Betrieb eines Automatisierungssystems, das mindestens zwei untereinander kommunikativ verbundene, zumindest zeitweise als Sender oder Empfänger fungierende Geräte, insbesondere Automatisierungsgeräte oder Programmiergeräte, im Folgenden zusammenfassend als Gerät bezeichnet, umfasst. Die als Sender bzw. Empfänger fungierenden Geräte tauschen dabei Daten nach einem für das jeweilige Kommunikationsmedium, z. B. einem Feldbus, definierten Protokoll aus. Die Datenübermittlung erfolgt dabei in Form so genannter Telegramme.

Das Kommunikationsprotokoll ist dabei in Anlehnung an das so genannte OSI-Schichtenmodell aufgebaut. Zum Aufbauen einer Kommunikation werden üblicherweise drei Schichten benötigt, nämlich die Schicht 2 (Data-Link/Treiberebene), die Schicht 4 (Transport) und die Schicht 7 (Anwendung). Die Schicht 7 ist in der Regel diejenige Schicht, die als Schnittstelle zwischen dem Kommunikationsprotokoll und der aufsetzenden Anwendung, z. B. einer Entwicklungsumgebung zur Erstellung und Wartung von Automatisierungslösungen, vorgesehen ist. Um eine Verständigung zwischen einer solchen Anwendung und der Schicht 7 zu ermöglichen, wird dem Programmierer solcher Entwicklungsumgebungen ein so genanntes API (application programming interface) zur Verfügung gestellt. Solche APIs zeichnen sich mitunter durch eine erhebliche Mächtigkeit, z. B. mehrere Dutzend parametrierbare Funktionen, die dem Applikationsprogrammierer den Zugang zum Protokoll erleichtern oder ermöglichen, aus.

Während mit solchen Funktionen eine Verwendung des Kommunikationsprotokolls zum Auf- und Abbauen von Kommunikationsverbindungen und zum Transfer von Daten über solche Kommunikationsverbindungen möglich ist, ist es nicht möglich, zur Laufzeit und unter reellen Betriebsbedingungen Performanceuntersuchungen im Hinblick auf den Datenaustausch zwischen einer Anwendung und der Protokollschicht 7 zu realisieren. Folglich ist es schwierig, verschiedene Anwendungen leistungsmäßig zu vergleichen, z. B. im Hinblick auf die Frage, wie lange der Aufbau einer Verbindung dauert. Ebenso können neue Protokollentwicklungen nicht mit bestehenden Protokollen in ihrer Leistungsfähigkeit verglichen werden.

Im Zusammenhang mit der oben skizzierten Problematik ist bisher versucht worden, Leistungsaussagen anhand von Labormessungen, z. B. mittels so genannter Traces und dergleichen, zu treffen. Ein Protokoll oder die aufsetzende Anwendung zur Laufzeit unter reellen Bedingungen zu testen, ist entsprechend bisher nicht möglich.

Eine Aufgabe der vorliegenden Erfindung besteht entsprechend darin, die o.g. Nachteile zu vermeiden oder zumindest hinsichtlich ihrer Auswirkung zu reduzieren. Erfindungsgemäß wird dies mit einem Verfahren gemäß Patentanspruch 1 erreicht. Dazu ist bei einem Verfahren zum Betrieb eines Automatisierungssystems der o.g. Art vorgesehen, dass im Zusammenhang mit Kommunikationsvorgängen zwischen Sender und Empfänger übermittelte Telegramme von einem Protokollierungswerkzeug während des Kommunikationsvorgangs, also während der Laufzeit, erfasst und gespeichert werden, dass das Protokollierungswerkzeug als Mitschrift des Kommunikationsvorgangs eine Kombination der übermittelten Telegramme, so wie diese beim Empfänger kombiniert werden oder kombinierbar sind, zur weiteren Auswertung bereitstellt und dass die weitere Auswertung Performanceuntersuchungen umfasst.

Die Erfindung sieht also vor, Funktionsaufrufe in Bezug auf das Kommunikationsprotokoll, insbesondere Funktionsaufrufe, die sich auf Schicht 7 beziehen, samt Parameter und dergleichen transparent in einem Ausgangsstrom mitzuschreiben. Eine solche Mitschrift hat bisher nicht zur Verfügung gestanden. Die im Rahmen des Kommunikationsvorgangs übermittelten Daten sind entsprechend dem Protokoll verarbeitet und nur durch den jeweiligen Empfänger interpretiert worden, so dass ein Zugriff auf diese Daten erst wieder auf Seiten des Empfängers möglich wird, wobei ein solcher Zugriff keinerlei Aussagen über die Dauer des Verbindungsaufbaus oder die Anzahl ansonsten noch bestehender Verbindungen zulässt. Der Ansatz gemäß der Erfindung schafft hier nach bestem Wissen der Anmelderin erstmals Abhilfe, indem die Mitschrift zur weiteren Auswertung bereitgestellt wird und eine solche weitere Auswertung Performanceuntersuchungen, also z. B. eine Untersuchung im Hinblick darauf, welche Zeit bis zum Aufbau einer Verbindung verstreicht, benötigt wird.

Das Protokollierungswerkzeug ist dabei nach Art eines Protocol analysers realisiert, der sämtliche über das jeweilige Kommunikationsmedium übertragenen Daten erfasst und speichert. Das Protokollierungswerkzeug ist dabei derart ausgebildet, dass die übermittelten Telegramme genauso kombiniert werden, wie diese beim Empfänger kombiniert werden oder kombinierbar sind. Dies bewirkt, dass inhaltliche Zusammenhänge erhalten bleiben, wenn z. B. größere Datenmengen, z. B. ein Funktionsbaustein, übermittelt werden und deren Übermittlung die Verwendung mehrerer aufeinander folgender Telegramme, die beim Empfänger nicht notwendig in der gleichen Reihenfolge eintreffen müssen, erfordert. Mit einer solchen Kombination und dem Erhalt der jeweils zugrunde liegenden Strukturen ist es z. B. möglich, nicht nur die Dauer für den Aufbau einer Kommunikationsverbindung zu erfassen, sondern z. B. auch zu erfassen, wann in einem Kommunikationsvorgang das erste und das letzte Telegramm auf das Kommunikationsmedium gegeben wird oder beim Empfänger eintrifft.

Weitere Vorteile und Einzelheiten ergeben sich anhand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bevorzugt ist vorgesehen, dass die Performanceuntersuchung auch die Untersuchung von Nutzdaten, wie sie mit Telegrammen der o.g. Art übermittelt werden, umfasst. Auf diese Art und Weise kann z. B. eine Performanceuntersuchung im Hinblick darauf durchgeführt werden, wie lange ein bestimmter Alarm, wobei die Unterscheidung im Hinblick auf den jeweiligen vorgegebenen oder vorgebbaren Alarm sich anhand einer Analyse der Nutzdaten ergibt, benötigt, um von allen Kommunikationsteilnehmern im Automatisierungssystem oder zumindest von den jeweils adressierten Kommunikationsteilnehmern im Automatisierungssystem empfangen zu werden. Ausgehend davon lassen sich grundsätzlich beliebige Bedingungen nach Art von Trigger-Bedingungen formulieren, die z. B. auch darauf abstellen können, wie lange unter einer bestimmten Betriebsbedingung (erste Nutzdatenauswertung) die Übermittlung eines bestimmten Alarms (zweite Nutzdatenauswertung) in Anspruch nimmt.

Das Verfahren ist bevorzugt in Software implementiert, so dass die Erfindung auch ein diesbezügliches Computerprogramm oder ein Computerprogrammprodukt, also einen Speicher an sich bekannter Art, mit einem solchen Computerprogramm umfasst.

Des Weiteren bezieht sich die Erfindung auch auf eine Verwendung des eingangs beschriebenen und nachfolgend erläuterten Verfahrens zum Vergleich, insbesondere zum quantitativen Vergleich, von Kommunikationsvorgängen nach einem ersten Protokoll mit Kommunikationsvorgängen nach einem zweiten Protokoll. Dies hat den Vorteil, dass bei Revisionsänderungen, die sich auch oder ausschließlich auf das Kommunikationsprotokoll beziehen, konkrete, insbesondere quantitative Aussagen dahingehend getroffen werden können, ob sich beim Übergang vom ersten zum zweiten Protokoll Performanceänderungen ergeben.

Die Beantwortung solcher Fragestellungen ist insbesondere dann relevant, wenn das zweite Protokoll auf dem ersten Protokoll als dessen Weiterentwicklung oder Ergänzung basiert, so dass auf Basis der nach dem Verfahren oder der Verwendung des Verfahrens erhältlichen Performanceuntersuchungen auch Optimierungen im Hinblick auf eine Verbesserung der Implementation des zweiten Protokolls möglich werden.

Nachfolgend wird ein Ausführungsbeispiel der Erfindung anhand der Zeichnung näher erläutert, das nicht als Einschränkung der Erfindung zu verstehen ist. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Einander entsprechende Gegenstände oder Elemente sind in allen Figuren mit den gleichen Bezugszeichen versehen.

### Darin zeigen

- FIG 1: ein Automatisierungssystem zur Steuerung und/oder Überwachung eines technischen Prozesses entsprechend einer für das Automatisierungssystem und den technischen Prozess definierten Automatisierungslösung,
- FIG 2: einen Kommunikationsvorgang zwischen einem ersten und einem zweiten von dem Automatisierungssystem umfassten Gerät, wobei bei der Übertragung übermittelte Daten von einem Protokollierungswerkzeug erfasst und gespeichert werden, wobei das Protokollierungswerkzeug anhand der erfassten Daten eine Mitschrift des Übertragungsvorgangs erstellt, die bei weiteren Auswertungen zugrunde gelegt werden kann, und
- FIG 3: eine Benutzeroberfläche für das Protokollierungswerkzeug.

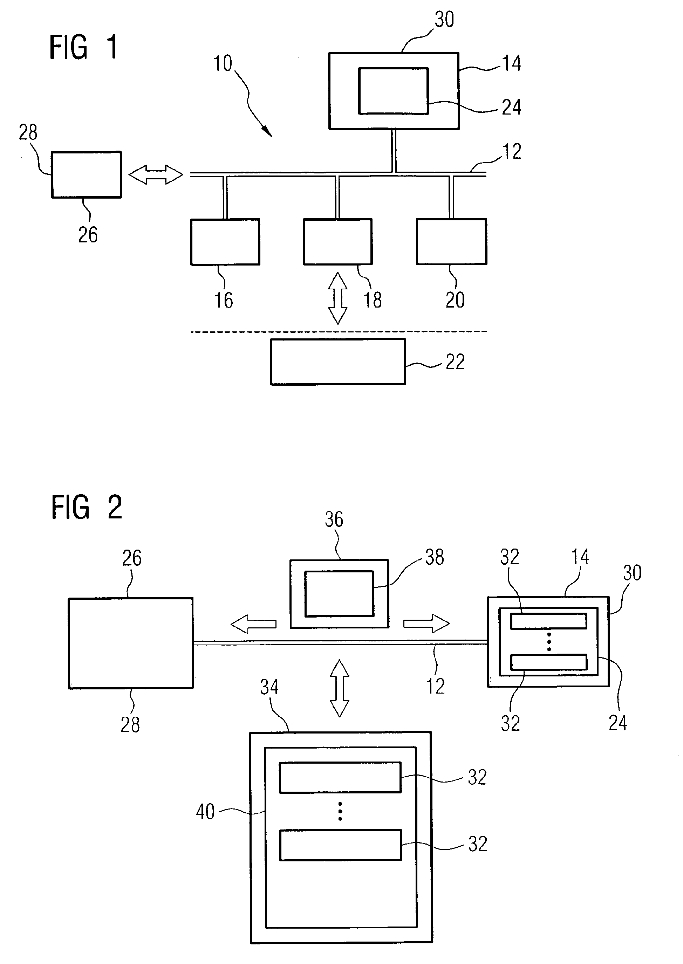

FIG 1 zeigt in schematisch vereinfachter Form ein insgesamt mit 10 bezeichnetes Automatisierungssystem, das in der dargestellten Form eine Anzahl von kommunikativ über z. B. einen Bus 12 verbundenen Automatisierungsgeräten 14, 16, 18, 20 umfasst, die zusammen einen ebenfalls nur schematisch dargestellten technischen Prozess 22, z. B. einen Produktionsprozess, wie z. B. die Herstellung eines Automobils oder von Automobilteilen oder die Herstellung von z. B. Arzneimitteln und dergleichen, überwachen und/oder steuern. Zur Steuerung und/oder Überwachung des technischen Prozesses 22 ist dem Automatisierungssystem 10 oder einzelnen Automatisierungsgeräten 14 als Automatisierungslösung ein Steuerungsprogramm 24 zugeordnet, unter dessen Kontrolle bei Ausführung durch dafür vorgesehene Verarbeitungseinheiten innerhalb des Automatisierungssystems 10 dieses im Zusammenwirken mit nicht dargestellten Sensoren und Aktoren die Steuerung und/oder Überwachung des technischen Prozesses 22 übernimmt.

Der Begriff "Automatisierungsgerät" umfasst dabei sämtliche Geräte, Einrichtungen oder Systeme, also neben z. B. Steuerungen, wie speicherprogrammierbaren Steuerungen, Prozessrechnern, (Industrie-) Computern und dergleichen, auch Antriebssteuerungen, Frequenzumrichter und Ähnliches, wie sie zur Steuerung, Regelung und/oder Überwachung technologischer Prozesse z. B. zum Umformen oder Transportieren von Material, Energie oder Information etc. eingesetzt werden oder einsetzbar sind, wobei insbesondere über geeignete technische Einrichtungen, wie z. B. Sensoren oder Aktoren, Energie aufgewandt oder gewandelt wird.

Dem Automatisierungssystem 10 ist zumindest zeitweise ein Programmiergerät 26 zugeordnet, mit dem das Steuerungsprogramm 24 erstellt, gewartet oder modifiziert werden kann. Als Kommunikationsvorgang kommt dabei z. B. eine Übermittlung eines neuen oder modifizierten Steuerungsprogramms 24 zwischen dem als Sender 28 fungierenden Programmiergerät 26 und einem als Empfänger 30 fungierenden Automatisierungsgerät 14, 16, 18, 20 in Betracht. Nach erfolgter Übertragung des Steuerungsprogramms 24 an das Automatisierungsgerät 14 kann dieses dort zur Ausführung gelangen.

FIG 2 zeigt in einer anderen Darstellung in schematisch vereinfachter Form einen Ausschnitt aus der Darstellung gemäß FIG 1, und zwar als Kommunikationsvorgang zwischen einem ersten und einem zweiten vom Automatisierungssystem 10 umfassten Gerät eine Datenübertragung vom Programmiergerät 26 zu einem der Automatisierungsgeräte 14, 16, 18, 20, hier dem Automatisierungsgerät 14. Für die weitere Beschreibung wird davon ausgegangen, dass die kommunikative Verbindung zwischen Programmiergerät 26 und Automatisierungsgerät 14 über den Bus 12 besteht. Alternativ kann auch vorgesehen sein, dass die kommunikative Verbindung auf anderem Wege, z. B. auf leitungslosem Wege, hergestellt ist.

Bei der Übertragung zwischen Programmiergerät 26 und Automatisierungsgerät 14 übermittelte Daten 32 werden von einem Protokollierungswerkzeug 34 erfasst und gespeichert. Das Protokollierungswerkzeug 34 hat dazu in geeigneter Art und Weise Zugriff auf die Datenübertragung zwischen Sender 28 und Empfänger 30, also z. B. auf den Kommunikationsvorgang zwischen Programmiergerät 26 und Automatisierungsgerät 14, etwa indem es in Hardware an den Bus 12 angeschlossen ist oder indem es bei einer Implementation in Software in die Funktionen integriert oder mit solchen Funktionen in geeigneter Form kombiniert ist, die beim Übertragen der Daten 32 verwendet werden. Beide Alternativen sollen in der Darstellung in FIG 2 durch den Doppelpfeil veranschaulicht sein.

Zum Erfassen und Speichern der Daten 32 überwacht das Protokollierungswerkzeug 34 zwischen Sender 30 und Empfänger ausgetauschte Telegramme 36. Solche Telegramme 36 werden in an sich bekannter Art und Weise zwischen den an einer Kommunikation jeweils beteiligten Teilnehmern, hier also dem als Sender 30 fungierenden Programmiergerät 26 und dem als Empfänger 32 fungierenden Automatisierungsgerät 14, ausgetauscht. Jedes Telegramm 36 umfasst dabei Nutzdaten 38, die während des Kommunikationsvorgangs, also zur Laufzeit, vom Protokollierungswerkzeug 34 erfasst und als Daten 32 gespeichert werden.

Auch wenn in der bildlichen Darstellung in FIG 2 nur ein Telegramm 36 dargestellt ist, versteht es sich von selbst, dass Kommunikationsvorgänge, wie z. B. die Übertragung eines Steuerungsprogramms 24, eine Vielzahl von Telegrammen 36 umfassen können, wobei die zum jeweiligen Kommunikationsvorgang gehörigen Daten 32 auf eine Mehrzahl von Telegrammen 36 aufgeteilt sind. Ebenfalls kann über das jeweils verwendete Kommunikationsmedium, hier also z. B. den Bus 12, während eines ersten Kommunikationsvorgangs mit einer Folge dabei benötigter Telegramme 36 das Versenden weiterer Telegramme geschehen, die zu Kommunikationsvorgängen zwischen anderen Kommunikationsteilnehmern oder einem anderen Kommunikationsvorgang als der Übermittlung des Steuerungsprogramms 24 zwischen den beschriebenen Kommunikationsteilnehmern, also Programmiergerät 26 und Automatisierungsgerät 14, gehören. Das Protokollierungswerkzeug 34 wertet in dieser Hinsicht den Datenstrom, also die Folge von Telegrammen 36, am Kommunikationsmedium aus und übernimmt nur diejenigen Daten 32, die zum jeweiligen Kommunikationsvorgang, also z. B. zur Übertragung des Steuerungsprogramms 24 zwischen Programmiergerät 26 und Automatisierungsgerät 14, gehören. Im Datenstrom ist grundsätzlich nicht gewährleistet, dass die Reihenfolge der Telegramme 36, mit denen das Steuerungsprogramm 24 übertragen wird, der tatsächlichen Reihenfolge der Daten 32, die das Steuerungsprogramm 24 bilden, entspricht. Insoweit nimmt das Protokollierungswerkzeug 34 auch quasi eine Sortierung der Daten 32 vor, so dass die bei der Übertragung erfassten Daten 32 in die ursprünglich vorgesehene Reihenfolge gebracht werden können. All dies ist von der Formulierung, wonach das Protokollierungswerkzeug 34 eine "Kombination der übertragenen Daten 32, so wie sie aufgrund der Telegramme 36 beim Automatisierungsgerät 14 kombiniert werden oder kombinierbar sind, vornimmt", umfasst. Die Summe der bei einer Übertragung erfassten Daten 32 wird im Folgenden als Mitschrift 40 bezeichnet und kann je nach Umfang des Steuerungsprogramms 24 eine entsprechende Vielzahl von Daten 32 umfassen.

Die Mitschrift 40 steht bereits während des Kommunikationsvorgangs, insbesondere aber nach dessen Abschluss für Performanceuntersuchungen zur Verfügung. Anhand der Mitschrift 40, insbesondere durch Zugriff auf die davon umfassten Daten 32, lässt sich z. B. die Dauer eines synchronen Verbindungsaufbaus ermitteln. Des Weiteren kommt für Performanceuntersuchungen in Betracht, zu ermitteln, wie viele Kommunikationsvorgänge zu einem bestimmten, vorgegebenen oder vorgebbaren Zeitpunkt oder während einer bestimmten vorgegebenen oder vorgebbaren Zeitspanne bestehen. Schließlich kann die Performanceuntersuchung auch die Untersuchung von Nutzdaten 38, wie sie von dem oder jedem Telegramm 36 umfasst sind, beinhalten. Ein Zugriff auf die Nutzdaten 38 ist dabei zumindest indirekt über einen Zugriff auf die von der Mitschrift 40 umfassten Daten 32 möglich.

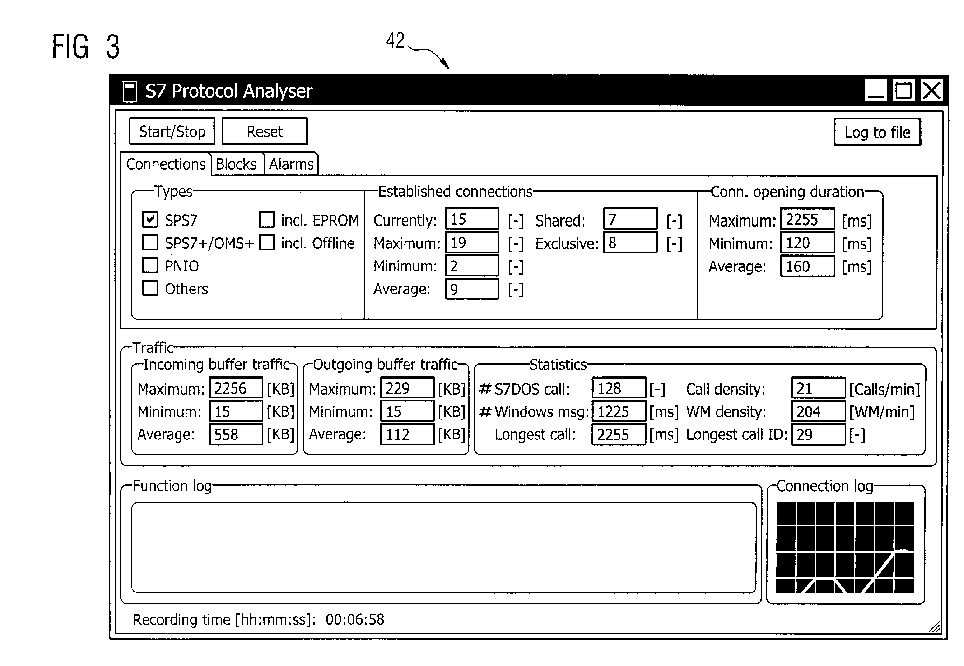

FIG 3 zeigt eine mögliche Ausführungsform einer Benutzeroberfläche 42 für das Protokollierungswerkzeug 34 (FIG 2), über die eine Vielzahl von Parametern zur näheren Konkretisierung der jeweils vorzunehmenden Performanceuntersuchungen definierbar ist.

Damit lässt sich die Erfindung kurz wie folgt darstellen: Es wird ein Verfahren zum Betrieb eines Automatisierungssystems 10 angegeben, das mindestens zwei untereinander kommunikativ verbundene, zumindest zeitweise als Sender 28 und Empfänger 30 fungierende Geräte umfasst, wobei im Zusammenhang mit Kommunikationsvorgängen zwischen Sender 28 und Empfänger 30 übermittelte Telegramme 36 von einem Protokollierungswerkzeug 34 während des Kommunikationsvorgangs, also zur Laufzeit, erfasst und gespeichert werden, wobei das Protokollierungswerkzeug 34 eine Mitschrift 40 des Kommunikationsvorgangs für Performanceuntersuchungen bereitstellt.

## Patentansprüche

1. Verfahren zum Betrieb eines mindestens zwei untereinander kommunikativ verbundene, zumindest zeitweise als Sender (28) oder Empfänger (30) fungierende Geräte umfassenden Automatisierungssystems (10),
- wobei im Zusammenhang mit Kommunikationsvorgängen zwischen Sender (28) und Empfänger (30) übermittelte Telegramme (36) von einem Protokollierungswerkzeug (34) während des Kommunikationsvorgangs erfasst und gespeichert werden,
- wobei das Protokollierungswerkzeug (34) als Mitschrift (40) des Kommunikationsvorgangs eine Kombination der übermittelten Telegramme (36), so wie diese beim Empfänger (30) kombiniert werden oder kombinierbar sind, zur weiteren Auswertung bereitstellt und
- wobei die weitere Auswertung Performanceuntersuchungen umfasst.

2. Verfahren nach Anspruch 1, wobei die Performanceuntersuchung die Untersuchung einer Dauer eines synchronen Verbindungsaufbaus umfasst.

3. Verfahren nach Anspruch 1, wobei die Performanceuntersuchung die Untersuchung einer Anzahl von zu einem bestimmten, vorgegebenen oder vorgebbaren Zeitpunkt oder während einer bestimmten, vorgegebenen oder vorgebbaren Zeitspanne bestehenden Kommunikationsvorgängen umfasst.

4. Verfahren nach Anspruch 1, 2 oder 3, wobei die Performanceuntersuchung die Untersuchung von dem oder jedem Telegramm (36) umfassten Nutzdaten (38) umfasst.

5. Verfahren nach Anspruch 4, wobei die Untersuchung der Nutzdaten (38) automatisierungssystemspezifische Datentypen, insbesondere Alarme und Bausteine, umfasst.

6. Computerprogramm mit durch einen Computer ausführbaren Programmcodeanweisungen zur Implementierung des Verfahrens nach einem der Ansprüche 1 bis 5, wenn das Computerprogramm auf einem Computer ausgeführt wird.

7. Computerprogrammprodukt, insbesondere Speichermedium, mit einem durch einen Computer ausführbaren Computerprogramm gemäß Anspruch 6.

8. Verwendung des Verfahrens nach einem der Ansprüche 1 bis 5 zum Vergleich, insbesondere zum quantitativen Vergleich, von Kommunikationsvorgängen nach einem ersten Protokoll mit Kommunikationsvorgängen nach einem zweiten Protokoll.

9. Verwendung nach Anspruch 8, wobei das zweite Protokoll auf dem ersten Protokoll als dessen Weiterentwicklung oder Ergänzung basiert.
